# EUROPÄISCHE PATENTSCHRIFT

(11) **EP 2 822 360 B1**
(45) Veröffentlichungstag und Bekanntmachung des Hinweises auf die Patenterteilung: **11.09.2019**
(21) Anmeldenummer: 14175484.6
(22) Anmeldetag: 02.07.2014
(51) Int. Cl.: H05B 37/02, H05B 33/08

(54) **Verfahren zur durch Gestensteuerung berührungslos erfolgenden Bedienung einer Leuchte**
Method for contact-free operation of a light by means of gesture control
Procédé de commande d'un éclairage sans contact par commande gestuelle

(30) Priorität: 04.07.2013 DE 102013213162
(43) Veröffentlichungstag der Anmeldung: 07.01.2015
(60) Teilanmeldung: 16184646.4
(73) Patentinhaber: Mechaless Systems GmbH, 76646 Bruchsal (DE)
(72) Erfinder: Hill, Uwe, 75196 Remchingen (DE); Kilian, Markus, 76698 Ubstadt-Weiher (DE); Vollmer, Lars, 75015 Bretten (DE)
(74) Vertreter: dompatent von Kreisler Selting Werner - Partnerschaft von Patent- und Rechtsanwälten mbB

(56) Entgegenhaltungen:
- WO-A1-2006/056814
- WO-A1-2009/059464
- DE-B3- 10 251 133
- US-A1- 2010 259 174

## Beschreibung

Die Erfindung betrifft ein Verfahren zur berührungslosen Bedienung einer Leuchte, und zwar durch Gestensteuerung, insbesondere per Hand oder allgemein durch ein Objekt.

Die Steuerung von Leuchten durch einen Bediener erfolgt im Regelfall manuell und zwar durch z. B. Betätigung von Tasten, Schaltern odgl. Auch sind sogenannte "Touch"-Leuchten bekannt, die durch Antippen einer elektrisch leitenden Fläche ein- und ausgeschaltet werden.

In zunehmendem Maße werden heutzutage elektrische bzw. elektronische Geräte durch Gesten gesteuert, wobei hier in erster Linie an Gesten durch Handbewegungen zu denken ist. Allgemein ausgedrückt reagieren derartige Leuchten auf die Annäherung bspw. eines menschlichen Körpers oder einer Hand, wobei die dabei vollführte Geste für die Steuerung der Leuchte entscheidend ist. Ein Beispiel für den zuvor genannten Stand der Technik ist in DE-B-102 51 133 beschrieben.

Sollen Leuchten, die neben einem Ein- und einem Auszustand auch mindestens einen (weiteren) Einstellmodus (bspw. zur Helligkeitseinstellung bzw. zum Dimmen) aufweisen, berührungslos durch Gesten gesteuert werden, so besteht ein Problem bei der Bedienung der Leuchte darin, dass der Bediener sich nicht sicher sein kann, ob sich die Leuchte in einem der Einstellmodi und/oder in welchem Einstellmodus sich die Leuchte aktuell befindet.

Diverse Verfahren zur Gestensteuerung von elektrischen Verbrauchern, und zwar insbesondere von Leuchten, sind aus WO-A-2006/056 814, US-A-2010/0 253 241, WO-A-2009/059464, WO-A-2011/124 206, US-A-2010/0 244 752 und DE-A-10 2009 043 168 bekannt.

Eine Leuchte mit Gestensteuerung und den Merkmalen des Oberbegriffs des Anspruchs 1 ist aus US-A-2010/259174 bekannt.

Aufgabe der Erfindung ist es, den Bedienkomfort von durch Gestensteuerung berührungslos bedienbaren Leuchten zu verbessern.

Zur Lösung dieser Aufgabe wird mit der Erfindung ein Verfahren zur durch Gestensteuerung berührungslos erfolgenden Bedienung einer Leuchte vorgeschlagen, wobei die Leuchte versehen ist mit
- mindestens einem Leuchtmittel, das längs einer optischen Lichtabstrahlachse und durch eine Lichtaustrittsöffnung der Leuchte (10) ein Lichtstrahlbündel abgibt,
- einer Sensoranordnung zur Erkennung einer Bewegung eines Objekts in das Lichtstrahlbündel hinein und/oder aus dem Lichtstrahlbündel heraus und/oder innerhalb des Lichtstrahlbündels und zur Erkennung eines Stillstehens eines Objekts in dem Lichtstrahlbündel, wobei es sich bei dem Objekt insbesondere um eine Hand handelt, und
- einer Auswerte- und Ansteuereinheit, die von der Sensoranordnung eine Bewegung des Objekts, die Bewegungsrichtung des Objekts sowie ein Stillstehen des Objekts repräsentierende Signale empfängt sowie diese zur Detektion einer Bewegung oder eines Stillstehens des Objekts auswertet und die das mindestens eine Leuchtmittel ansteuert,
- wobei die Leuchte im eingeschalteten Zustand in mindestens einen Einstellmodus zur Einstellung oder Veränderung mindestens eines lichttechnischen Betriebsparameters der Leuchte wie z. B. die Helligkeit des Lichts, die Farbe des Lichts, die Farbsättigung des Lichts, den Grad der Aufweitung des Lichtstrahlbündels und/oder die Ausrichtung des Lichtstrahlbündels im Raum, umschaltbar ist.

Bei dem erfindungsgemäßen Verfahren wird
- durch Bewegung des Objekts vor der Lichtaustrittsöffnung zwischen einem Ausschaltzustand und einem Einschaltzustand der Leuchte umgeschaltet wird,
- durch bei eingeschalteter Leuchte innerhalb des Lichtstrahlbündels erfolgendes Stillstehen des Objekts die Leuchte von einer Deaktivierung mindestens eines Einstellmodus oder eines von mehreren Einstellmodi auf dessen Aktivierung umgeschaltet wird,
- wobei die Aktivierung und/oder die Deaktivierung des mindestens einen Einstellmodus bzw. eines der mehreren Einstellmodi optisch angezeigt wird, indem die Auswerte- und Ansteuereinheit das mindestens eine Leuchtmittel zur intermittierenden Veränderung mindestens eines in dem aktivierten Einstellmodus ein- bzw. verstellbaren lichttechnischen Betriebsparameters der Leuchte wie z. B. zum Helligkeitsflackern, zur insbesondere reversiblen Farbveränderung, zur insbesondere reversiblen Farbsättigungsveränderung, zur insbesondere reversiblen Lichtstrahlbündel-Aufweitung oder -verengung oder zur reversiblen Verschwenkung des Lichtstrahlbündels ansteuert, und
- durch eine sich an ein Stillstehen des Objekts anschließende Bewegung des Objekts der lichttechnische Betriebsparameter, der bzw. die sich in dem aktivierten Einstellmodus einstellen und/oder verändern lässt/lassen, eingestellt bzw. verändert wird,
- wobei der Einstellmodus oder einer der Einstellmodi die Einstellung von zwei oder drei lichttechnischen Parametern der Leuchte umfasst und die Bewegung des Objekts im Wesentlichen in jeweils einer der beiden entgegengesetzten Richtungen je Koordinatenlinie erfolgt, und zwar
   - im Falle zweier lichttechnischer Parameter jeweils längs zweier zueinander orthogonaler Koordinatenlinien eines virtuellen zweidimensionalen Koordinatensystems, das eine Untermenge eines virtuellen dreidimensionalen Koordinatensystems ist, und
   - im Falle dreier lichttechnischer Parameter jeweils längs dreier zueinander orthogonaler Koordinatenlinien eines virtuellen dreidimensionalen Koordinatensystems,
   wobei eine Symmetrie- oder Koordinatenachse des besagten virtuellen dreidimensionalen Koordinatensystems parallel zur Lichtabstrahlachse oder zur Senkrechten des Aufstellungsraumes der Leuchte oder zur Flächennormalen der Aufstell- oder Befestigungsfläche der Leuchte verläuft.

Mit dem erfindungsgemäßen Verfahren lassen sich solche Leuchten durch Gestensteuerung berührungslos bedienen, bei denen im eingeschalteten Zustand in mindestens einen Einstellmodus geschaltet werden kann. Der Einstellmodus dient der Ein- bzw. Verstellung mindestens eines lichttechnischen Betriebsparameters der Leuchte, bei dem es sich bspw. um die Helligkeit oder die Farbe des Lichts oder die Farbsättigung des Lichts, um die Ausrichtung des Lichts im Raum und um die Aufweitung des Lichtkegels bzw. allgemein ausgedrückt des Lichtstrahls bzw. Lichtstrahlbündels handeln kann.

Erfindungsgemäß wird nun die Leuchte bei Aktivierung eines Einstellmodus derart angesteuert, dass sie kurzzeitig und intermittierend den Betriebsparameter, der sich in dem aktivierten Einstellmodus verändern bzw. einstellen lässt, automatisch verändert. Handelt es sich bei dem Einstellmodus bspw. um einen Helligkeitseinstellmodus, so könnte die Leuchte kurzzeitig aufflackern, um danach wieder mit der Helligkeit zu leuchten, die bisher eingestellt war. Durch eine nun erfolgende Bewegung eines Objekts bzw. der Hand kann dann die Helligkeit eingestellt werden.

Durch die optische Rückmeldung der Aktivierung des Einstellmodus wird der Bediener darüber unterrichtet, dass nun der betreffende lichttechnische Betriebsparameter eingestellt bzw. verstellt werden kann. Durch unterschiedliche optische Rückmeldungen wird der Bediener darüber in Kenntnis gesetzt, in welchem von mehreren Einstellmodi sich die Leuchte gerade befindet, um alsdann den betreffenden lichttechnischen Betriebsparameter ändern zu können. Nach der Erfindung ist vorgesehen, dass die Leuchte durch eine Bewegung zum Lichtstrahlbündel hin bzw. von diesem weg oder durch dieses hindurch ein- und ausgeschaltet wird. Bspw. könnte man die Leuchte durch eine Bewegung der Hand vor der Lichtaustrittsöffnung der Leuchte bzw. über diese Lichtaustrittsöffnung hinweg die Leuchte einschalten, um sie durch eine Handbewegung durch das abgegebene Licht hindurch wieder auszuschalten. Wenn die zu diesem Zweck vorgesehene Sensoranordnung im eingeschalteten Zustand der Leuchte ein insbesondere im Lichtstrahlbündel stillstehendes Objekt detektiert, so wird dies erfindungsgemäß als Wunsch des Bedieners gewertet, den mindestens einen Einstellmodus der Leuchte zu aktivieren. Dies wird optisch quittiert, woraufhin dann durch Bewegung des Objekts der betreffende Betriebsparameter eingestellt werden kann. Durch wiederum ein Stillstehen des Objekts wird dann der gerade aktivierte Einstellmodus deaktiviert.

Lässt sich die Leuchte in mehr als einem Einstellmodus betreiben (bspw. für eine Helligkeitsveränderung und eine Farbveränderung), so kann durch wiederholt abwechselnd erfolgendes Bewegen und Stillstehen des Objekts wechselweise bzw. zyklisch zwischen diesen Einstellmodi umgeschaltet werden. Alternativ ist es aber auch möglich, dass die Sensoranordnung in Abhängigkeit von der Richtung, in der sich das Objekt dem Lichtstrahlbündel annähert (in eingeschaltetem Zustand der Leuchte), den entsprechen Einstellmodus aktiviert, sobald ein stillstehendes Objekt (im Anschluss an die Annäherung des Objekts) detektiert wird. Schließlich kann die Umschaltung zwischen den Einstellmodi auch zeitbasiert erfolgen, z. B. indem das Objekt für eine bestimmte Maximalzeitdauer stillsteht.

Der lichttechnische Betriebsparameter, der sich in dem betreffenden aktivierten Einstellmodus verändern lässt, kann durch eine wie auch immer geartete Bewegung des Objekts eingestellt werden. Als eine vorteilhafte Methode, weil intuitiv, hat sich die Einstellung bspw. der Helligkeit oder der Farbe des Lichts oder der Farbsättigung des Lichts durch eine Bewegung des Objekts in im Wesentlichen zwei entgegengesetzten Richtungen längs der Lichtabstrahlachse herausgestellt.

Nach der Erfindung kann mindestens ein Einstellmodus existieren, in dem man die Einstellung vom mehreren lichttechnischen Parametern vornehmen kann. Die Bewegungen des Objekts, nämlich beispielsweise der Hand des Bedieners, zur Einstellung dieser mehreren Betriebsparameter müssen ausreichend verschieden voneinander sein, um über den berührungslos arbeitenden Sensor zuverlässig unterschieden und damit mit ausreichender Sicherheit identifiziert werden zu können.

In einer beispielhaften Ausgestaltung der Erfindung können drei Parameter, beispielsweise die drei Parameter Helligkeit, Farbe und Farbsättigung des Lichts durch entgegengesetzte Bewegungen entlang der Koordinatenlinien eines virtuellen typischerweise orthogonalen dreidimensionalen Koordinatensystems verstellt werden. Als Koordinatensysteme kommen insbesondere ein sphärisches, ein kartesisches und ein zylindrisches Koordinatensystem in Betracht, wobei die Leuchtstrahlachse oder die Senkrechte des Raumes, in dem sich die Leuchte befindet, oder das Lot auf die Ebene, auf der die Lampe steht oder an der sie befestigt ist, typischerweise eine Koordinaten- oder Symmetrieachse eines solchen virtuellen Koordinatensystems darstellt. Bei der Verstellung von nur zwei Parametern ist entsprechend lediglich eine zweidimensionale Teilmenge der Koordinatensystem-Koordinaten notwendig. Ebenso ist bei der Verstellung von nur einem Parameter lediglich eine eindimensionale Teilmenge der Koordinatensystem-Koordinaten notwendig.

In einem Lichtstrahlbündelveränderungsmodus könnte bspw. die Aufweitung des Lichtstrahlbündels durch eine Bewegung des Objekts in der zuvor beschriebenen Art erfolgen, während eine Lichtstrahlbündelausrichtung durch im Wesentlich quer zur Lichtabstrahlrichtung erfolgendes Bewegen des Objekts realisiert werden, wobei dann das Lichtstrahlbündel der Bewegung des Objekts folgt.

Beide zuvor genannten Lichtstrahlbündeleinstellungen lassen sich aber auch in voneinander getrennten Einstellmodi verändern. Die Einstellmodi können insbesondere dann der unabhängigen Einstellung mehrerer lichttechnischer Betriebsparameter der Leuchte dienen, wenn die jeweiligen Objektbewegungen derart verschieden, insbesondere orthogonal zueinander sind, dass sie von der Sensoranordnung unterscheidbar sind.

Zweckmäßig ist es, wenn die Einstellung der jeweiligen lichttechnischen Betriebsparameter der Leuchte wie bei einem Inkrementalgeber erfolgt. Das bedeutet, dass eine Veränderung eines Betriebsparameters stets ausgehend von demjenigen Wert erfolgen kann, auf den der Betriebsparameter zuvor, d. h. bei Aktivierung des Einstellmodus, eingestellt war. Die Position bzw. der Abstand des stillstehenden Objekts zur Leuchte im Augenblick der Aktivierung eines Einstellmodus hat also keine Auswirkung auf eine Verstellung des Betriebsparameters; vielmehr lässt sich dieser Betriebsparameter von seinem bis dato geltenden Wert erst durch eine anschließende Bewegung des Objekts verändern.

Die erfindungsgemäß bedienbare Leuchte kann bspw. zur Veränderung eines ihrer lichttechnischen Betriebsparameter mehrere ggf. unterschiedlich ausgerichtete und/oder farblich unterschiedliche Leuchtmittel und/oder mehrere Leuchtmittel unterschiedlicher Typen bzw. Technologien und/oder mechanische Stellglieder und/oder optische Elemente wie z. B. Blenden, Reflektoren, Linsen odgl. aufweisen.

Die Erfindung wird nachstehend anhand diverser Ausgestaltungen und unter Bezugnahme auf die Zeichnungen näher erläutert. Im Einzelnen zeigen dabei:

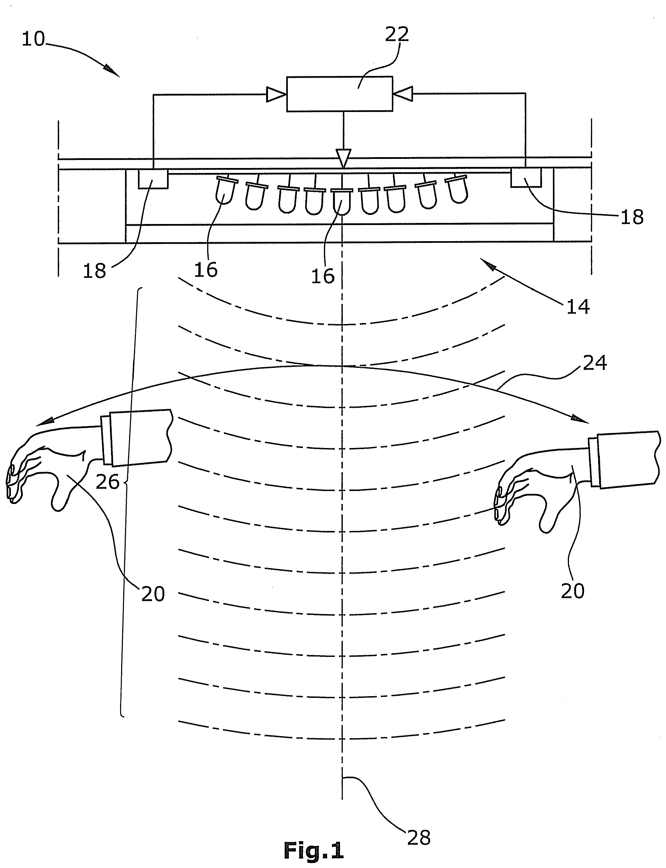

- Fign. 1 bis 7: schematische Darstellungen unterschiedlicher Arten der Bedienung einer Leuchte durch Gestensteuerung per Hand.

In Fig. 1 ist eine Leuchte 10 gezeigt, die mehrere Leuchtmittel 14 in Form von LEDs 16 aufweist. Selbstverständlich kann die Erfindung auch bei Leuchten mit andersartigen Leuchtmitteln 14 Verwendung finden.

Ferner weist die Leuchte 10 eine Sensoranordnung 18 auf, die insbesondere optisch arbeitet und bei der es sich um eine Annäherungssensorik handelt. Die Sensoranordnung 18 ist in der Lage, eine sich an der Leuchte 10 vorbeibewegende Hand 20 oder aber eine sich auf die Leuchte 10 zu bzw. von der Leuchte 10 weg bewegende Hand zu erkennen. Die Sensoranordnung 18 arbeitet bspw. auf Basis des HALIOS®-Prinzips, wobei mehrere derartige Sensoreinheiten zur Erkennung von Bewegungsrichtungen im Raum vorgesehen sind. Die Sensoranordnung 18, die alternativ oder zusätzlich auch kapazitiv, induktiv oder magnetfeldabhängig arbeiten kann, ist über eine Auswerte- und Steuereinheit 22 mit den Leuchtmitteln 14 gekoppelt. Die Sensoranordnung 18 liefert Sensorsignale an die Auswerte- und Ansteuereinheit 22, in der diese Signale bewertet und zur entsprechenden Ansteuerung der Leuchtmittel 14 umgesetzt werden.

In Fig. 1 ist ein Beispiel für eine Gestensteuerung zum wechselweisen Ein- und Ausschalten der Leuchte 10 gezeigt. Hierbei wird die Hand 20 in einer Richtung des Doppelpfeils 24 durch das Lichtstrahlbündel 26 und damit auch durch die Lichtabstrahlachse 28 hindurch bewegt.

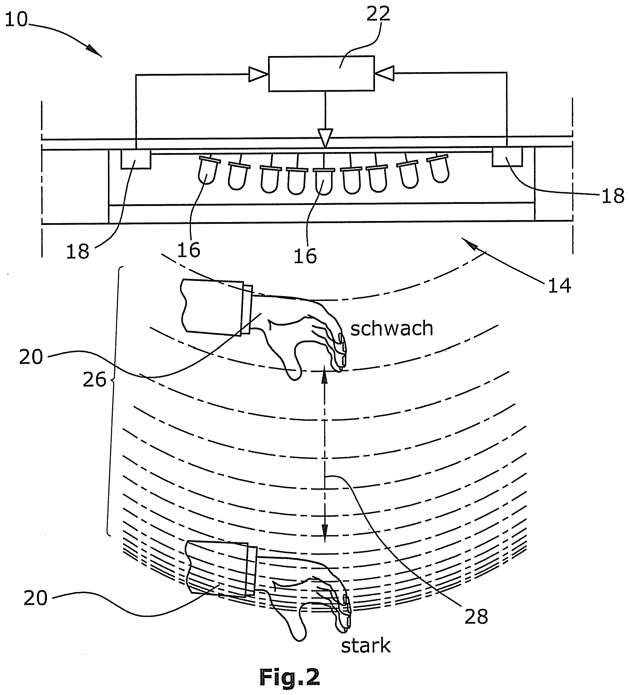

Fig. 2 zeigt die Leuchte 10 im eingeschalteten Zustand, wobei über die Sensoranordnung 18 eine im Lichtstrahlbündel 26 stillstehende Hand 20 detektiert wird. Durch Auf- und Abbewegung der Hand im Wesentlichen längs der Lichtabstrahlachse 28 lässt sich nun bspw. die Helligkeit einstellen, wobei in Fig. 2 durch die weiter entfernt angeordneten, dicht aufeinanderfolgenden Lichtstrahlwellenfronten angedeutet ist, dass sich durch eine Bewegung der Hand 20 von der Leuchte 10 weg die Helligkeit erhöhen und umgekehrt durch eine Annäherung der Hand 20 an die Leuchte 10 die Helligkeit verringern lässt. Die Aktivierung dieses Helligkeitsmodus erfolgt im eingeschalteten Zustand der Leuchte 10, und zwar dadurch, dass die Erkennung des Stillstehens der Hand 20 nach einer Annäherung an die Leuchte 10 durch ein kurzzeitiges Flackern der Leuchte 10 quittiert und somit für den Benutzer optisch sichtbar gemacht wird. Nach Einstellung der gewünschten Helligkeit verharrt der Benutzer mit seiner Hand 20 wiederum kurzzeitig im Lichtstrahlbündel 26, was über die Sensoranordnung 18 und die Auswerte- und Ansteuereinheit 22 als Beendigung des Helligkeitsmodus und damit als dessen Deaktivierung interpretiert wird.

Auf die zuvor beschriebene Weise lassen sich die einzelnen Einstellmodi der Leuchte 10 entweder zyklisch aufeinanderfolgend oder aber in Abhängigkeit von der Raumrichtung, aus der sich der Benutzer mit seiner Hand 20 bei eingeschalteter Leuchte 10 dieser genähert hat, anwählen.

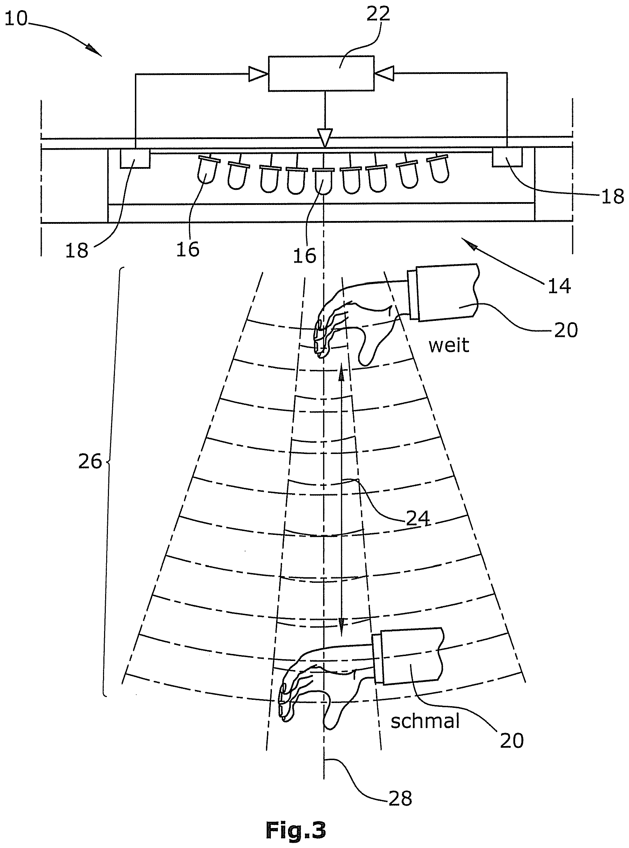

Fig. 3 zeigt ein Beispiel für die Einstellung der Lichtstrahlbündelaufweitung durch Gestensteuerung. Je weiter sich die Hand 20 von der Leuchte 10 bewegt, desto fokussierter ist das Lichtstrahlbündel, was durch die unterschiedlich weiten Lichtwellenfrontlinien in Fig. 3 angedeutet ist. Die Aktivierung dieses Einstellmodus, in dem die Aufweitung des Lichtstrahlbündels 26 einstellbar ist, kann bspw. dadurch optisch von der Leuchte 10 signalisiert werden, dass sich das Lichtstrahlbündel aufweitet und dann wieder verjüngt, um dann wieder den vorherigen Zustand anzunehmen.

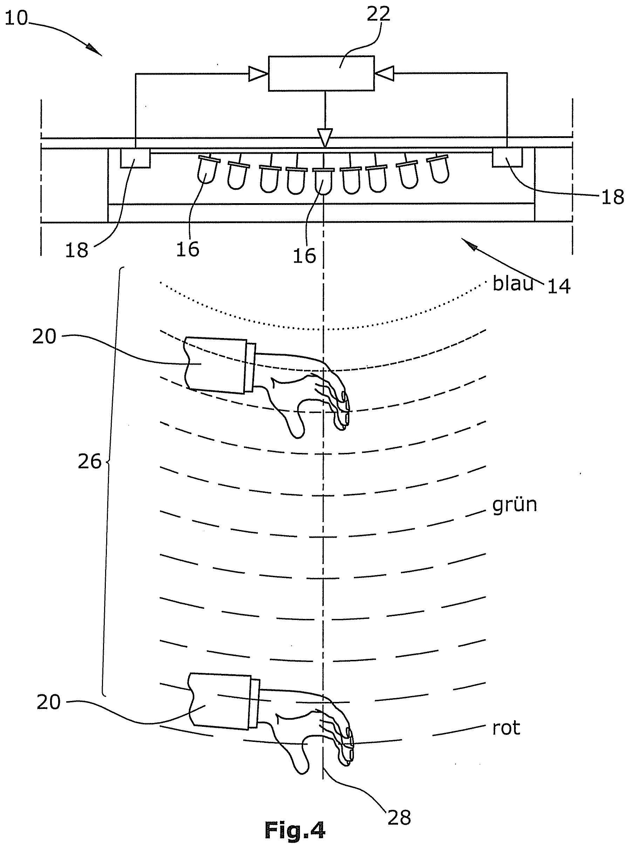

Fig. 4 zeigt ein Beispiel für eine Gestensteuerung zur Einstellung der Farbe des Lichts der Leuchte 10. Durch eine Bewegung der Hand 20 längs der Lichtabstrahlachse 28 bzw. im Wesentlichen längs dieser Achse lässt sich die Farbe bspw. von kurzwelligem Licht zu langwelligem Licht und umgekehrt verändern, was in Fig. 4 durch die unterschiedlich gestrichenen Lichtwellenfrontlinien angedeutet ist. Die Aktivierung des Farbmodus wird bspw. dadurch optisch angezeigt, dass sich die Farbe des Lichts der Leuchte 10 kurzzeitig reversibel verändert.

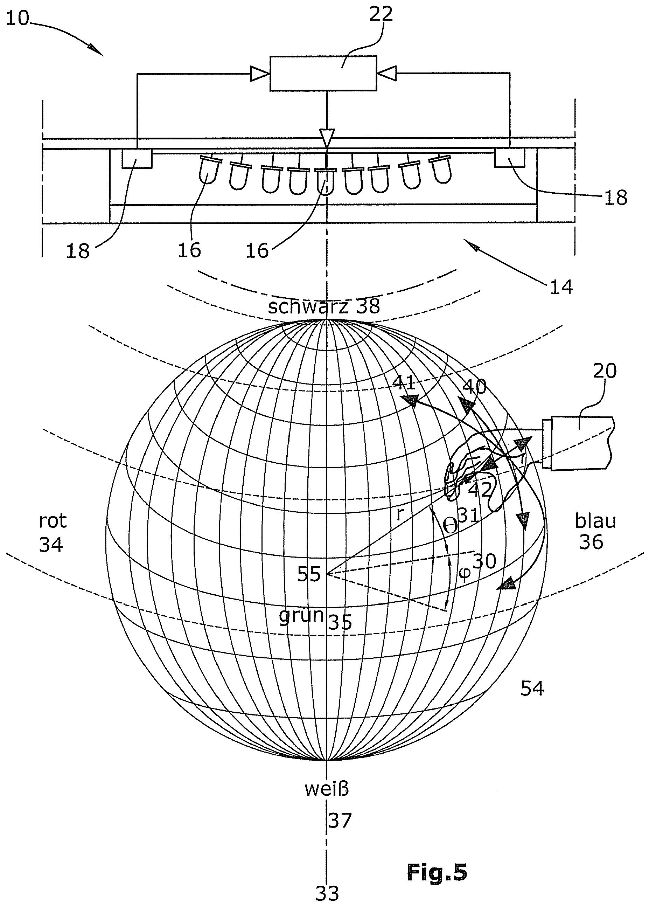

Fig. 5 zeigt ein Beispiel für eine Gestensteuerung unter Anwendung eines virtuellen sphärischen Koordinatensystems 54. In diesem Beispiel wird die Gestensteuerung zur Einstellung der Farbe, Helligkeit und Farbintensität des Lichts der Leuchte 10 benutzt. Die Leuchte 10 erfasst dabei im Gegensatz zu den Beispielen der Fign. 1 bis 4 nicht nur eine Bewegungsrichtung, sondern Bewegungsrichtungen in mehr Freiheitsgraden als nur einem. Von den theoretisch denkbaren sechs Freiheitsgraden der Bewegung eines Objektes, hier der Hand des Bedieners, werden in diesem Beispiel drei Freiheitsgerade 40, 41, 42 in Bezug auf den Koordinatenursprung 55 des virtuellen Koordinatensystems 54 benutzt. Die Rotationsachse 33 des virtuellen sphärischen Koordinatensystems 54 ist überlappend mit der Lichtabstrahlachse 28 gewählt. Der erste Freiheitsgrad der Handbewegung ist eine Rotation 41 um die Lichtabstrahlachse 28 bzw. die Rotationsachse 33 des virtuellen sphärischen Koordinatensystems 54. Dabei ändert sich der Winkel ϕ (bei 30) der Objektposition. Der zweite Freiheitsgrad 40 ist eine Rotation um den Koordinatenursprung 55 des virtuellen sphärischen Koordinatensystems 54 hin zur Symmetrieachse 33. Dabei ändert sich der Winkel θ (bei 31) der Objektposition. Der dritte Freiheitsgrad 42 der Objektbewegung ist eine radiale Verschiebung. Dabei ändert sich der Abstand r des Objekts zum Koordinatenursprung 55 des virtuellen sphärischen Koordinatensystems. Durch eine Bewegung der Hand 20 in θ-Richtung (Pfeil 40) bzw. im Wesentlichen längs dieser Koordinatenlinie lässt sich beispielsweise die Farb-Sättigung der Leuchte verstellen. Durch eine Bewegung in einem Kreis am Äquator einer gedachten Kugel um den Koordinatenursprung 55 herum mit konstantem Radius r um die Symmetrieachse 28 in ϕ-Richtung (Pfeil 41) lässt sich beispielsweise die Farbe von Rot (34) nach Grün (35) und weiter von Grün (35) nach Blau (36) und weiter von Blau (36) wieder nach Rot (34) bei einem geschlossenen Umlauf längs des besagten Äquators verändern. Die Änderung der Farbsättigung erfolgt nun längs des Längengrades einer solchen gedachten Kugeloberfläche. Hierbei repräsentiert der Südpol mit der Farbe Weiß (bei 37) die geringste Farbsättigung im subtraktiven Farbmodell während der Nordpol in diesem Beispiel Schwarz (38) und damit die geringste Farbsättigung im additiven Farbmodell darstellt. Durch eine Bewegung der Hand 20 des Bedieners in radialer Richtung 42 von dem Koordinatenursprung 55 wird beispielsweise die Helligkeit eingestellt. Somit strahlt die Leuchte 10 bei einer Positionierung der Hand 20 am Südpol 37 weiß und bei einer Positionierung der Hand 20 am Äquator 34, 35, 36 fern der Lichtabstrahlachse 28 monochrom. Neben dieser beispielhaften Implementierung des HSL Farbmodells sind können durch eine analoge Zuordnung anderer Farbmodelle als des hier verwendeten HSL-Farbmodells ähnliche Bedieneffekte erzielt werden. Beispielsweise ist unter anderem die Verwendung folgender Farbmodelle und Farbräume denkbar:
- LMS-Farbraum -physiologischer Farbraum, der auf den spektralen Empfindlichkeiten der L-, M-, S-Zapfen aufbaut.
- XYZ-Farbraum - von der CIE ursprünglich aufgestellter Normfarbraum, auf rechnerischen Koordinaten X, Y, Z konstruiert, die aus Zapfenempfindlichkeiten erstellt sind.
- RGB-Farbraum -Farbraum, der aus der Computertechnik bekannt ist und im Internet Verwendung findet.
- CMYK-Farbmodell -vier Farben-Farbraum, der der Drucktechnik entstammt. Hier können jedoch nur drei der vier Parameter verstellt werden. Der zusätzliche Schwarzanteil muss auf null gestellt werden, da ein Leuchtmittel kein schwarzes Licht aussenden kann (CMY Modell).
- HSV-Farbraum mit den Varianten HSL, HSB, HSI -Farbraum, der aus Design, Dokumentation von Malerei und Videokunst bekannt ist.
- Lab-Farbraum oder CIE-Farbenraum, die aus dem XYZ-Farbraum abgeleitet sind, der ebenfalls alle wahrnehmbaren Farben umfasst, und dessen Weiterentwicklung, dem DIN99-Farbraum.
- LCh°-Farbraum, der eine Darstellung von HSV-Farbraum, LUV-Farbraum oder LAB-Farbraum in Polarkoordinaten ist.
- I1I2I3-Farbraum, der ein rechentechnisch optimierter Farbraum ist, der in der Bildverarbeitung normalerweise benutzt wird.
- YCbCr-Farbraum (manchmal kurz auch YCC-Farbraum genannt), der beim digitalen Fernsehen, sowohl beim digitalen PAL als auch beim digitalen NTSC, DVB, JPEG, MPEG, DVD-Video etc. verwendung findet.
- xvYCC Farbraum - ein gegenüber dem YCbCr-Farbraum erweiterter Farbraum, der die gesamten 8 Bit pro Farbkanal nutzt und normalerweise für Flachbildschirme verwendet wird.
- YPbPr-Farbraum - der normalerweise beim analogen HDTV oder analogen Component Video eingesetzt wird.
- YUV-Farbraum - der für analoges PAL und NTSC Fernsehen normalerweise eingesetzt wird.
- YIQ-Farbraum - der für analoges NTSC eingesetzt wurde.
- YDbDr-Farbraum - der für analoges SECAM eingesetzt wurde.
- YCC-Farbmodell - das auf Kodak Photo CDs verwendet wird.

Selbstverständlich sind auch andere orthogonale Koordinatensysteme in Kombination mit verschiedenen Farbsystemen denkbar. Z.B. ist die Verwendung von Zylinderkoordinaten denkbar, wobei alle drei Hauptausrichtungen mit der Rotationsachse parallel zur Lichtabstrahlachse 28 und senkrecht dazu denkbar. Weiter Koordinatensysteme wären zylindrisch-parabolische Koordinatensysteme ellipsoide Koordinatensysteme etc. In der mathematischen Literatur sind verschiedene orthogonale Koordinatensysteme bekannt.

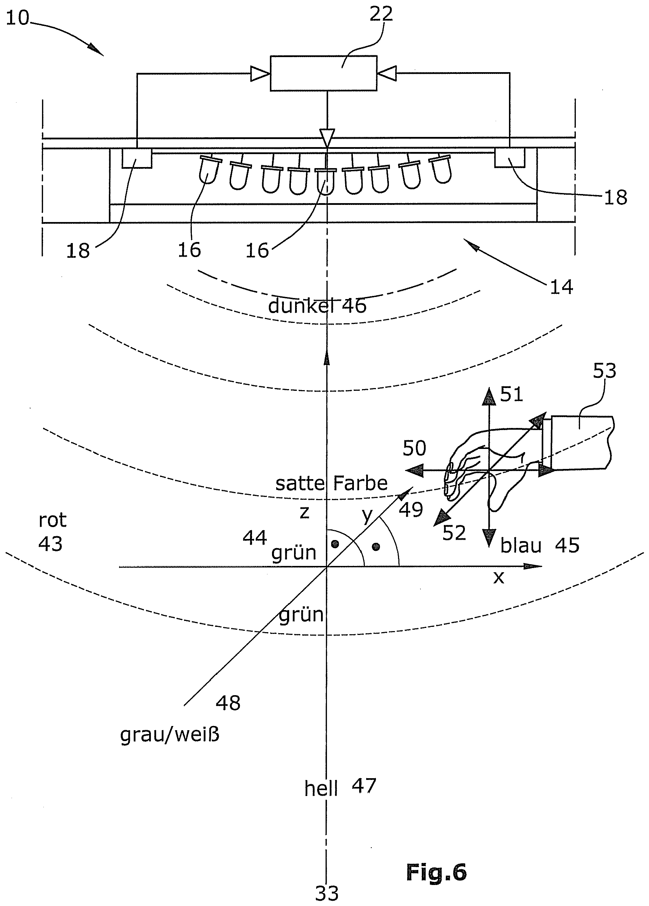

Fig. 6 zeigt das Verfahren für ein einfaches kartesisches Koordinatensystem. Die z-Achse 37 ist überdeckend mit der Lichtabstrahlachse 28 gewählt. Über eine Bewegung 51 der Hand 53 längs dieser z-Achse kann zum Beispiel zwischen "dunkel" (bei 46) und "hell" (bei 47) eingestellt werden. In diesem Beispiel ist die Richtung der x-Achse so zugeordnet, dass die Farbe des abgestrahlten Lichts durch eine Bewegung (Pfeil 50) der Hand 53 in x-Richtung verstellt wird. Dabei ist einer Position ganz links (bei 43) der Farbe Rot zugeordnet, der Position an der Lichtabstrahl- und z-Achse (bei 37) die Farbe Grün und der Position ganz rechts (bei 45) die Farbe Blau zugeordnet. Der Bewegung (bei 52) in Richtung der y-Achse ist in diesem Beispiel die Farbsättigung zugeordnet. So entspricht der Punkt ganz vorne (bei 48) einer farblosen weißen oder grauen Beleuchtung. Der Punkt ganz hinten (bei 49) einer vollen Farbsättigung.

Diese Beispiele sind natürlich willkürlich aus den mannigfachen Möglichkeiten der Zuordnungen von Funktionen, Koordinatensystemen, Richtungen und Parameterwerten gewählt.

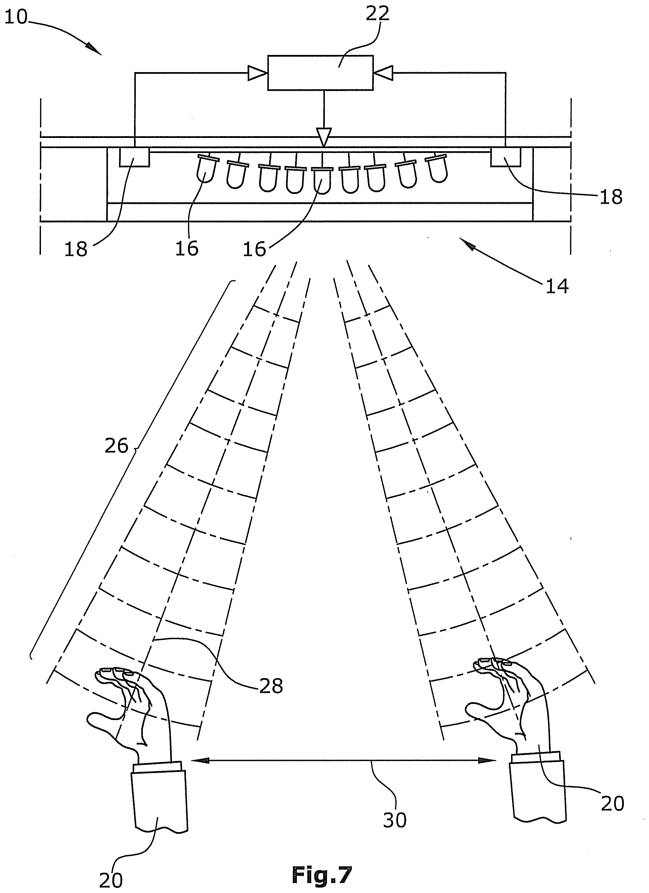

Fig. 7 schließlich zeigt den Fall, dass sich durch eine Bewegung der Hand 20 in einer der beiden durch den Doppelpfeil 30 angedeuteten Richtungen die Ausrichtung des Lichtstrahlbündels verändern lässt. Dieser Einstellmodus wird bspw. dadurch optisch signalisiert, dass die eingeschaltete Leuchte 10 kurzzeitig den Lichtstrahlbündel 26 vor und zurückschwenkt.

## Patentansprüche

1. Verfahren zur durch Gestensteuerung berührungslos erfolgenden Bedienung einer Leuchte (10), wobei die Leuchte (10) versehen ist mit
- mindestens einem Leuchtmittel (14), das längs einer optischen Lichtabstrahlachse (28) und durch eine Lichtaustrittsöffnung der Leuchte (10) ein Lichtstrahlbündel (26) abgibt,
- einer Sensoranordnung (18) zur Erkennung einer Bewegung eines Objekts (20) in das Lichtstrahlbündel (26) hinein und/oder aus dem Lichtstrahlbündel (26) heraus und/oder innerhalb des Lichtstrahlbündels (26) und zur Erkennung eines Stillstehens eines Objekts (20) in dem Lichtstrahlbündel (26), wobei es sich bei dem Objekt (20) insbesondere um eine Hand handelt, und
- einer Auswerte- und Ansteuereinheit (22), die von der Sensoranordnung (18) eine Bewegung des Objekts (20) sowie ein Stillstehen des Objekts (20) repräsentierende Signale empfängt sowie diese zur Detektion einer Bewegung oder eines Stillstehens des Objekts (20) auswertet und die das mindestens eine Leuchtmittel ansteuert,
- wobei die Leuchte im eingeschalteten Zustand in mindestens einen Einstellmodus zur Einstellung oder Veränderung mindestens eines lichttechnischen Betriebsparameters der Leuchte (10) wie z. B. die Helligkeit des Lichts, die Farbe des Lichts, die Farbsättigung des Lichts, den Grad der Aufweitung des Lichtstrahlbündels und/oder die Ausrichtung des Lichtstrahlbündels (26) im Raum, umschaltbar ist,
wobei bei dem Verfahren
- durch Bewegung des Objekts (20) vor der Lichtaustrittsöffnung zwischen einem Ausschaltzustand und einem Einschaltzustand der Leuchte (10) umgeschaltet wird,
- durch bei eingeschalteter Leuchte (10) innerhalb des Lichtstrahlbündels (26) erfolgendes Stillstehen des Objekts (20) die Leuchte (10) von einer Deaktivierung mindestens eines Einstellmodus oder eines von mehreren Einstellmodi auf dessen Aktivierung umgeschaltet wird,
- wobei die Aktivierung und/oder die Deaktivierung des mindestens einen Einstellmodus bzw. eines der mehreren Einstellmodi optisch angezeigt wird, indem die Auswerte- und Ansteuereinheit (22) das mindestens eine Leuchtmittel (14) zur intermittierenden Veränderung mindestens eines in dem aktivierten Einstellmodus ein- bzw. verstellbaren lichttechnischen Betriebsparameters der Leuchte (10) wie z. B. zum Helligkeitsflackern, zur insbesondere reversiblen Farbveränderung, zur insbesondere reversiblen Farbsättigungsveränderung, zur insbesondere reversiblen Lichtstrahlbündel-Aufweitung oder -Verengung oder zur reversiblen Verschwenkung des Lichtstrahlbündels (26) ansteuert,
- wobei durch eine sich an ein Stillstehen des Objekts (20) anschließende Bewegung des Objekts (20) der lichttechnische Betriebsparameter, der bzw. die sich in dem aktivierten Einstellmodus einstellen und/oder verändern lässt/lassen, eingestellt bzw. verändert wird,
- wobei der Einstellmodus oder einer der Einstellmodi die Einstellung eines lichttechnischen Parameters der Leuchte umfasst und
- wobei eine Symmetrie- oder Koordinatenachse (33) eines virtuellen dreidimensionalen Koordinatensystems parallel zur Lichtabstrahlachse (28) oder zur Gravitations-Senkrechten des Aufstellungsraumes der Leuchte oder zur Flächennormalen der Aufstell- oder Befestigungsfläche der Leuchte verläuft,
**dadurch gekennzeichnet, dass**
- der Einstellmodus oder einer der Einstellmodi die Einstellung von zwei oder drei lichttechnischen Parametern der Leuchte (10) umfasst und die Bewegung (41, 40, 42, 50, 51, 52) des Objekts (20) im Wesentlichen in jeweils einer der beiden entgegengesetzten Richtungen je Koordinatenlinie erfolgt, und zwar
- im Falle zweier lichttechnischer Parameter jeweils längs zweier zueinander orthogonaler Koordinatenlinien eines virtuellen zweidimensionalen Koordinatensystems, das eine Untermenge des virtuellen dreidimensionalen Koordinatensystems ist, und
- im Falle dreier lichttechnischer Parameter jeweils längs dreier zueinander orthogonaler Koordinatenlinien des virtuellen dreidimensionalen Koordinatensystems.

2. Verfahren nach Anspruch 1, **dadurch gekennzeichnet, dass** der oder ein aktivierter Einstellmodus durch ein während der Aktivierung des Einstellmodus erfolgendes Stillstehen des Objekts (20) deaktiviert wird.

3. Verfahren nach Anspruch 1 oder 2, **dadurch gekennzeichnet, dass** im Falle mehrerer Einstellmodi zwischen diesen durch wiederholt abwechselnd erfolgendes Bewegen und Stillstehen des Objekts (20) oder durch für ein vorgebbares Maximalintervall erfolgendes Stillstehen des Objekts (20) zyklisch umgeschaltet wird.

4. Verfahren nach Anspruch 1 oder 2, **dadurch gekennzeichnet, dass** im Falle mehrerer Einstellmodi einer dieser durch eine Annäherung des Objekts (20) an das Lichtstrahlbündel (26) aus einer für diesen Einstellmodus spezifischen Raumrichtung mit sich daran anschließendem Stillstehen des Objekts (20) ausgewählt wird.

5. Verfahren nach einem der Ansprüche 1 bis 4, **dadurch gekennzeichnet, dass** der Einstellmodus oder einer der Einstellmodi ein Helligkeitsmodus ist und ggf. dass die Helligkeit durch eine Bewegung des Objekts (20) in einer der beiden entgegengesetzten Richtungen im Wesentlichen längs der Lichtabstrahlachse (28) eingestellt wird.

6. Verfahren nach einem der Ansprüche 1 bis 5, **dadurch gekennzeichnet, dass** der Einstellmodus oder einer der Einstellmodi ein Farbmodus ist und ggf. dass die Farbe oder Farbsättigung durch eine Bewegung des Objekts (20) in einer der beiden entgegengesetzten Richtungen im Wesentlichen längs der Lichtabstrahlachse (28) eingestellt wird.

7. Verfahren nach einem der Ansprüche 1 bis 6, **dadurch gekennzeichnet, dass** der Einstellmodus oder einer der Einstellmodi ein Lichtstrahlbündelaufweitungsgradmodus ist und ggf. dass eine Aufweitung und Verengung des Lichtstrahlbündels (26) durch eine Bewegung des Objekts (20) in der einen bzw. der anderen der beiden entgegengesetzten Richtungen im Wesentlichen längs der Lichtabstrahlachse (28) eingestellt wird.

8. Verfahren nach einem der Ansprüche 1 bis 7, **dadurch gekennzeichnet, dass** der Einstellmodus oder einer der Einstellmodi ein Lichtstrahlbündelausrichtmodus ist und ggf. dass durch eine Nachführung des Lichtstrahlbündels (26) entsprechend einer Bewegung des Objekts (20) die Ausrichtung des Lichtstrahlbündels (26) im Raum verändert wird.

9. Verfahren nach Anspruch 7 oder 8, **dadurch gekennzeichnet, dass** der Lichtstrahlbündelaufweitungsgradmodus und der Lichtstrahlbündel-ausrichtmodus zu einem gemeinsamen Lichtstrahlbündeleinstellmodus zusammengefasst sind.

10. Verfahren nach einem der Ansprüche 1 bis 9, **dadurch gekennzeichnet, dass** die Korrelation der Einstellung von Helligkeit und/oder Farbe und/oder Farbsättigung der Leuchte mit der Objektposition in dem besagten virtuellen Koordinatensystem nach einem der Farbmodelle oder Farbräume LMS, XYZ, RGB, CMYK, CMY, HSV, HSL, HSB, HSI, LAB, CIE, DIN99, LCh°, LUV, I1I2I3, YCbCr, YCC xvYCC, YPbPr, YUV,YIQ, YDbDr,YCC oder nach einem Teilraum dieser Farbräume eingestellt werden.

11. Verfahren nach einem der Ansprüche 1 bis 10, **dadurch gekennzeichnet, dass** es sich bei dem virtuellen dreidimensionalen Koordinatensystem um ein kartesisches, zylindrisches, sphärisches, elliptisches, parabolisch-elliptisches, hyperbolisch-elliptisches oder ein anderes orthogonales Koordinatensystem handelt.

## Claims

1. A method for contactless operation of a luminaire (10) by means of gesture control, wherein the luminaire (10) is provided with
- at least one illuminant (14) emitting a light beam (26) along an optical light radiation axis (28) and through a light emission opening of the luminaire (10),
- a sensor arrangement (18) for detecting a movement of an object (20) into the light beam bundle (26) and/or from the light beam bundle (26) and/or within the light beam bundle (26), and for detecting a standstill of an object (20) in the light beam bundle (26), wherein the object (20) is in particular a hand, and
- an evaluation and control unit (22) which receives signals representing a movement of the object (20) and a standstill of the object (20) from the sensor arrangement (18), and which evaluates these signals to detect a movement or a standstill of the object (20), and which controls the at least one illuminant,
- wherein the luminaire being switchable in a switched-on state into at least one setting mode for setting or changing at least one photometric operating parameter of the luminaire (10), such as the brightness of the light, the color of the light, the color saturation of the light, the degree of widening of the light beam bundle and/or the alignment of the light beam bundle (26) in space,
wherein in this method
- the luminaire (10) is switched between a switched-off state and a switched-on state by moving the object (20) in front of the light emission opening,
- the luminaire (10) is switched from deactivating at least one setting mode or one of a plurality of setting modes to activating the same if the object (20) stands still within the light beam bundle (26) when the luminaire (10) is switched on,
- wherein the activation and/or deactivation of the at least one setting mode or one of the plurality of setting modes is optically indicated, in that the evaluation and control unit (22) controls the at least one illuminant (14) for intermittently changing at least one photometric operating parameter of the luminaire (10) settable or adjustable in the activated setting mode, such as for brightness flickering, for in particular reversible color change, for in particular reversible color saturation change, for in particular reversible widening or narrowing of the light beam bundle or for reversible pivoting of the light beam bundle (26),
- wherein the photometric operating parameter/s, which can be set and/or changed in the activated setting mode, is/are set or changed by a movement of the object (20) following a standstill of the object (20),
- wherein the setting mode or one of the setting modes comprises the setting of a photometric operating parameter of the luminaire, and
- wherein a symmetry and coordinate axis (33) of a virtual three-dimensional coordinate system extends parallel to the light radiation axis (28), or to the gravitation vertical of the installation space of the luminaire, or to the surface normal of the installation or mounting surface of the luminaire,
**characterized in that**
- the setting mode or one of the setting modes comprises the setting of two or three photometric operating parameters of the luminaire (10), and **in that** the movement (41, 40, 42, 50, 51, 52) of the object (20) takes place substantially in respectively one of the two opposite directions per coordinate line, namely
- in the case of two photometric operating parameters each along two mutually orthogonal coordinate lines of a virtual two-dimensional coordinate system which is a subset of the virtual three-dimensional coordinate system, and
- in the case of three photometric operating parameters each along three mutually orthogonal coordinate lines of the virtual three-dimension coordinate system.

2. The method according to claim 1, **characterized in that** the or an activated setting mode is deactivated by a standstill of the object (20) occurring during the activation of the setting mode.

3. The method according to claim 1 or 2, **characterized in that**, in the case of a plurality of setting modes, the object (20) is cyclically switched between these modes by a repeated alternate movement and standstill of the object (20) or by a standstill of the object (20) for a predeterminable maximum interval.

4. The method according to claim 1 or 2, **characterized in that**, in the case of a plurality of setting modes, one of these modes is selected by approximation of the object (20) to the light beam bundle (26) from a spatial direction specific to this setting mode, followed by a standstill of the object (20).

5. The method according to any one of claims 1 to 4, **characterized in that** the setting mode or one of the setting modes is a brightness mode and, optionally, **in that** the brightness is set by a movement of the object (20) in one of the two opposite directions substantially along the light radiation axis (28).

6. The method according to any one of claims 1 to 5, **characterized in that** the setting mode or one of the setting modes is a color mode and, optionally, **in that** the color or color saturation is set by a movement of the object (20) in one of the two opposite directions substantially along the light radiation axis (28).

7. The method according to any one of claims 1 to 6, **characterized in that** the setting mode or one of the setting modes is a light beam bundle widening degree mode and, optionally, **in that** a widening and narrowing of the light beam bundle (26) is set by a movement of the object (20) in one or the other of the two opposite directions substantially along the light radiation axis (28).

8. The method according to any one of claims 1 to 7, **characterized in that** the setting mode or one of the setting modes is a light beam bundle alignment mode and, optionally, **in that** the alignment of the light beam bundle (26) in space is changed by tracking the light beam (26) in accordance with a movement of the object (20).

9. The method according to claim 7 or 8, **characterized in that** the light beam bundle widening degree mode and the light beam bundle alignment mode are combined into a common light beam bundle setting mode.

10. The method according to any one of claims 1 to 9, **characterized in that** the correlation of the setting of brightness and/or color and/or color saturation of the luminaire can be set with the object position in said virtual coordinate system according to one of the color models or color spaces LMS, XYZ, RGB, CMYK, CMY, HSV, HSL, HSB, HSI, LAB, CIE, DIN99, LCh°, LUV, I1I2I3, YCbCr, YCC xvYCC, YPbPr, YUV,YIQ, YDb-Dr,YCC or according to a subspace of these color spaces.

11. The method according to any one of claims 1 to 10, **characterized in that** the virtual three-dimensional coordinate system is a Cartesian, cylindrical, spherical, elliptical, parabolic-elliptical, hyperbolic-elliptical or another orthogonal coordinate system.

## Revendications

1. Procédé destiné au fonctionnement d'une lampe (10), résultant d'une commande gestuelle sans contact, dans lequel la lampe est prévue dotée
- d'au moins une source lumineuse (14), laquelle émet un faisceau lumineux (26) le long d'un axe d'émission optique (28) et au travers d'une ouverture de sortie de lumière de la lampe (10),
- d'un arrangement de capteurs (18) destiné à reconnaître un mouvement d'un objet (20) entrant dans le faisceau lumineux (26) et/ou sortant du faisceau lumineux (26) et/ou à l'intérieur du faisceau lumineux (26) et à reconnaître une immobilité d'un objet (20) dans le faisceau lumineux (26), dans lequel l'objet (20) est particulièrement une main, et
- d'une unité de contrôle et de commande (22), laquelle reçoit de l'arrangement de capteurs (18) des signaux représentant un mouvement de l'objet (20) ainsi qu'une immobilité de l'objet (20) de même qu'elle évalue ceux-ci afin de détecter un mouvement de l'objet (20) ou une immobilité de l'objet (20) et commande l'au moins une source lumineuse,
- dans lequel, dans l'état allumé, la lumière est commutable dans au moins un mode de réglage destiné au réglage ou à la modification d'au moins un paramètre opérationnel d'éclairage de lampe (10) comme par exemple la luminosité de la lumière, la couleur de la lumière, la saturation de la lumière, le degré d'élargissement du faisceau lumineux et/ou l'orientation du faisceau lumineux (26) dans la pièce,
dans lequel, lors du procédé
- la lampe (10) est commutée entre un état éteint et un état allumé par mouvement d'un objet (20) devant l'ouverture de sortie de lumière,
- la lampe (10) est commutée d'une désactivation d'au moins un mode de réglage ou d'un parmi plusieurs modes de réglage à l'activation de celui-ci par immobilité de l'objet à l'intérieur du faisceau lumineux (26) lorsque la lampe (10) est allumée,
- dans lequel l'activation et/ou la désactivation de l'au moins un mode de réglage ou de l'un parmi plusieurs modes de réglage est indiquée optiquement, l'unité de contrôle et de commande (22) commandant l'au moins une source lumineuse (14) afin de modifier de manière intermittente au moins un paramètre opérationnel d'éclairage de la lampe (10) réglable ou ajustable dans le mode de réglage activé comme par exemple pour obtenir un scintillement de la luminosité, un changement de couleur en particulier réversible, un changement de saturation de couleur en particulier réversible, un élargissement ou un rétrécissement du faisceau lumineux en particulier réversible ou un pivotement du faisceau lumineux (26) en particulier réversible,
- dans lequel le paramètre opérationnel d'éclairage pouvant être réglé et/ou modifié dans le mode de réglage actif est réglé ou modifié par un mouvement de l'objet (20) suivant une immobilité de l'objet (20),
- dans lequel le mode de réglage ou un des modes de réglage comprend le réglage d'un paramètre d'éclairage de la lampe et
- dans lequel un axe de symétrie ou un axe de coordonnées (33) d'un système virtuel tridimensionnel de coordonnées virtuelles tridimensionnel (28) est parallèle à l'axe d'émission optique (28) ou à la verticale de gravité de l'espace du local d'installation de la lampe ou à la normale de la surface d'installation ou de fixation de la lampe,
**caractérisé en ce que**
- le mode de réglage ou un des modes de réglage comprend le réglage de deux ou trois paramètres d'éclairage de la lampe (10) et le mouvement (41, 40, 42, 50, 51, 52) de l'objet (20) s'effectue essentiellement dans respectivement une des deux directions opposées de chaque droite de coordonnées, à savoir
- dans le cas de deux paramètres d'éclairage, respectivement le long de deux droites de coordonnées orthogonales l'une à l'autre d'un système virtuel bidimensionnel de coordonnées, lequel est un sous-ensemble du système virtuel tridimensionnel de coordonnées, et
- dans le cas de deux paramètres d'éclairage, respectivement le long de trois droites de coordonnées orthogonales l'une à l'autre du système virtuel tridimensionnel de coordonnées.

2. Procédé d'après la revendication 1, **caractérisé en ce que** le ou un mode de réglage est désactivé par une immobilité de l'objet (20) se produisant pendant l'activation du mode de réglage.

3. Procédé d'après la revendication 1 ou 2, **caractérisé en ce que** dans le cas où il existe plusieurs modes de réglage une commutation cyclique entre ceux-ci s'effectue par alternance répétée de mouvement et d'immobilité de l'objet (20) ou par immobilité de l'objet (20) pendant un intervalle maximal pouvant être prédéfini.

4. Procédé d'après la revendication 1 ou 2, **caractérisé en ce que** dans le cas où il existe plusieurs modes de réglage l'un de ceux-ci est sélectionné en approchant l'objet (20) du faisceau lumineux (26) depuis une direction spatiale spécifique à ce mode de réglage puis en y maintenant l'objet (20) immobile.

5. Procédé d'après l'une des revendications 1 à 4, **caractérisé en ce que** le mode de réglage ou un des modes de réglages est un mode de luminosité et, le cas échéant, **en ce que** la luminosité est réglée par un mouvement de l'objet dans une des deux directions opposées essentiellement le long de l'axe d'émission optique (28).

6. Procédé d'après l'une des revendications 1 à 5, **caractérisé en ce que** le mode de réglage ou un des modes de réglages est un mode de couleur et, le cas échéant, **en ce que** la couleur ou la saturation de la couleur est réglée par un mouvement de l'objet dans une des deux directions opposées essentiellement le long de l'axe d'émission optique (28).

7. Procédé d'après l'une des revendications 1 à 6, **caractérisé en ce que** le mode de réglage ou un des modes de réglages est un mode de degré d'élargissement du faisceau lumineux et, le cas échéant, **en ce qu'**un élargissement et un rétrécissement du faisceau lumineux (26) est réglé par un mouvement de l'objet dans une ou la des deux directions opposées essentiellement le long de l'axe d'émission optique (28).

8. Procédé d'après l'une des revendications 1 à 7, **caractérisé en ce que** le mode de réglage ou un des modes de réglages est un mode d'orientation du faisceau lumineux et, le cas échéant, **en ce que** l'orientation du faisceau lumineux (26) dans l'espace est modifiée par un guidage du faisceau lumineux (26) correspondant à un mouvement de l'objet (20).

9. Procédé d'après la revendication 7 ou 8, **caractérisé en ce que** le mode de degré d'élargissement du faisceau lumineux et le mode d'orientation du faisceau lumineux sont assemblés en un mode commun de réglage du faisceau lumineux.

10. Procédé d'après l'une des revendications 1 à 9, **caractérisé en ce que** la corrélation du réglage de la luminosité et/ou de la couleur et/de la saturation de la couleur de la lampe avec la position d'objet dans ledit système virtuel de coordonnées selon l'un des modèles de couleur ou espaces colorimétriques LMS, XYZ, RGB, CMYK, CMY, HSV, HSL, HSB, HSI, LAB, CIE, DIN99, LCh°, LUV, I1I2I3, YCbCr, YCC xvYCC, YPbPr, YUV, YIQ, YDbDr, YCC ou selon un sous-espace de ces espaces colorimétriques.

11. Procédé d'après l'une des revendications 1 à 10, **caractérisé en ce que** le système virtuel tridimensionnel de coordonnées est un système de coordonnées cartésien, cylindrique, sphérique, elliptique, parabolique-elliptique, hyperbolique-elliptique ou d'un autre système de coordonnées orthogonal.
